# EUROPÄISCHE PATENTANMELDUNG

(11) **EP 4 832 017 A1**
(43) Veröffentlichungstag der Anmeldung: **28.10.2026**
(21) Anmeldenummer: 25205290.7
(22) Anmeldetag: 29.09.2025
(51) Int. Cl.: G21K 1/04

(54) **SYSTEM UND VERFAHREN ZUM BEWEGEN EINER STRAHLENGANGSKOMPONENTE FÜR EINE RÖNTGENSTRAHLUNG**

(71) Anmelder: Siemens Healthineers AG, 91301 Forchheim (DE)
(72) Erfinder: Kießling, Florian, 91301 Forchheim (DE)
(74) Vertreter: Siemens Healthineers Patent Attorneys

(57) **Zusammenfassung**

Die Erfindung betrifft ein System zum Bewegen einer Strahlengangskomponente für eine Röntgenstrahlung,
- wobei das System eine Linearführung, ein Wagensystem, eine Gewindespindel, einen Gewindetrieb, einen Schrittmotor und ein Motorsteuerungssystem aufweist,
- wobei das Wagensystem zur Aufnahme der Strahlengangskomponente eingerichtet ist und mittels der Linearführung parallel zu einer Spindeldrehachse der Gewindespindel bewegbar gelagert ist,
- wobei der Gewindetrieb dazu eingerichtet ist, eine Drehbewegung der Gewindespindel um die Spindeldrehachse in eine Translationsbewegung des Wagensystems parallel zu der Spindeldrehachse umzusetzen,
- wobei der Schrittmotor zum Antreiben der Drehbewegung der Gewindespindel eingerichtet ist,
- dadurch gekennzeichnet, dass in einem feldorientierten Betriebszustand des Systems das Motorsteuerungssystem zu einem sensorlosen feldorientierten Regeln der Drehbewegung der Gewindespindel eingerichtet ist.

## Beschreibung

Die Erfindung betrifft ein System und ein Verfahren zum Bewegen einer Strahlengangskomponente für eine Röntgenstrahlung.

Für das Bewegen von Strahlengangskomponenten, beispielsweise für Filter, Kollimatoren und/oder Blenden in Computertomographiegeräten, können Schrittmotoren eingesetzt werden. Schrittmotoren eignen sich insbesondere für einfache Positionieraufgaben, sind allerdings auch im Drehzahlbetrieb einsetzbar. Zur Optimierung des Positionier- und des Drehzahlbetriebs kommen häufig zusätzliche Sensoren, beispielsweise in Form eines auf der Motorachse montierten Encoders, zum Einsatz, welche für die übergeordnete Motorsteuerung eine genauere und höher aufgelöste Information zur Rotorlage bereitstellen. Im Positionier- und Drehzahlbetrieb erlauben Encoder verbesserte Laufeigenschaften, eine höhere Antriebsdynamik, sowie einen präzieren Betrieb. Die Verwendung von Sensoren zur Rotorlageerfassung ist jedoch mit höheren Kosten und einer höheren Komplexität der Antriebskette verbunden. Hinzu kommt, dass Encoder, insbesondere deren elektronische Bauteile, anfällig gegenüber Röntgenstrahlungseinwirkung sind und damit eine häufige Ausfallursache sind und/oder zusätzliche Schirmmaßnahmen erfordern.

Als Stand der Technik sind hierbei die US 11 602 316 B2, DE 10 2020 214 314 B3 und DE 10 2022 206 622 B4 zu nennen.

Die Erfindung hat die Aufgabe eine Alternative zu bekannten Lösungen, welche ein Bewegen einer Strahlengangskomponente für eine Röntgenstrahlung betreffen, bereitzustellen. Die unabhängigen Ansprüche betreffen Lösungen dieser Aufgabe. Die abhängigen Ansprüchen betreffen besondere Ausführungsformen dieser Lösungen. Unabhängig vom grammatikalischen Geschlecht eines bestimmten Begriffes sind Personen mit männlicher, weiblicher oder anderer Geschlechteridentität mit umfasst.

Die Erfindung betrifft ein System zum Bewegen einer Strahlengangskomponente für eine Röntgenstrahlung,
- wobei das System eine Linearführung, ein Wagensystem, eine Gewindespindel, einen Gewindetrieb, einen Schrittmotor und ein Motorsteuerungssystem aufweist,
- wobei das Wagensystem zur Aufnahme der Strahlengangskomponente eingerichtet ist und mittels der Linearführung parallel zu einer Spindeldrehachse der Gewindespindel bewegbar gelagert ist,
- wobei der Gewindetrieb dazu eingerichtet ist, eine Drehbewegung der Gewindespindel um die Spindeldrehachse in eine Translationsbewegung des Wagensystems parallel zu der Spindeldrehachse umzusetzen,
- wobei der Schrittmotor zum Antreiben der Drehbewegung der Gewindespindel eingerichtet ist,
- dadurch gekennzeichnet, dass in einem feldorientierten Betriebszustand des Systems das Motorsteuerungssystem zu einem sensorlosen feldorientierten Regeln der Drehbewegung der Gewindespindel eingerichtet ist.

Ein englischer Fachbegriff für sensorloses feldorientiertes Regeln lautet "Sensorless Field Control" und wird mit "SFC" abgekürzt. Die Strahlengangskomponente kann beispielsweise ein Filter oder eine Blendenbacke, insbesondere eine erste Blendenbacke und/oder eine zweite Blendenbacke eines Kollimators, sein.

Eine Ausführungsform sieht vor, dass das sensorlose feldorientierte Regeln auf einem rückgekoppelten Beobachter-Modell basiert. Das Beobachter-Modell kann insbesondere algorithmisch und/oder zum Berechnen einer Rotorlage basierend auf einem Parameter eingerichtet sein. Der Parameter kann beispielsweise messbar und/oder steuerbar sein. Der Parameter kann beispielsweise einen Motorstrom und/oder eine Motorspannung zum Betrieb des Schrittmotors betreffen, insbesondere angeben. Eine Ausführungsform sieht vor, dass das Beobachter-Modell auf einem Luenberger-Beobachter und/oder einem erweiterten Kalman-Filter basiert.

Eine Ausführungsform sieht vor, dass das sensorlose feldorientierte Regeln auf einem rückkopplungslosen Schätzer-Modell basiert. Das Schätzer-Modell kann insbesondere algorithmisch und/oder zum Schätzen einer Rotorlage basierend auf einem Parameter eingerichtet sein. Der Parameter kann beispielsweise messbar und/oder steuerbar sein. Der Parameter kann beispielsweise einen Motorstrom und/oder eine Motorspannung zum Betrieb des Schrittmotors betreffen, insbesondere angeben.

Eine Ausführungsform sieht vor, dass in einem rastpositionsbezogenen Betriebszustand des Systems das Motorsteuerungssystem zu einem rastpositionsbezogenen Steuern der Drehbewegung der Gewindespindel eingerichtet ist. Das rastpositionsbezogene Steuern der Drehbewegung der Gewindespindel kann insbesondere sensorlos erfolgen. In dem rastpositionsbezogenen Betriebszustand des Systems kann insbesondere vorgesehen sein, dass der Schrittmotor diskrete elektromagnetische Rastpositionen aufweist und/oder dass der Schrittmotor mittels des Motorsteuerungssystems jede dieser elektromagnetischen Rastpositionen sensorlos, also ohne einen zur Rotorlagenerkennung vorgesehenen Sensor, direkt anfahren kann. Somit kann der Schrittmotor, insbesondere bei geringen Drehzahlen, beispielsweise im Positionierbetrieb, über die elektromagnetischen Rastpositionen diskrete Positionen sicher anfahren, ohne dabei die Information eines separaten Sensors zur Rotorlageerkennung zu benötigen.

Eine Ausführungsform sieht vor, dass das Motorsteuerungssystem dazu eingerichtet ist, in Abhängigkeit von einer Drehzahl der Drehbewegung der Gewindespindel zwischen dem sensorlosen feldorientierten Regeln und dem rastpositionsbezogenen Steuern umzuschalten.

Eine Ausführungsform sieht vor, dass das Motorsteuerungssystem dazu eingerichtet ist, von dem rastpositionsbezogenen Steuern zu dem sensorlosen feldorientierten Regeln umzuschalten, wenn eine Drehzahl der Drehbewegung der Gewindespindel einen Drehzahl-Schwellwertbereich überschreitet, und/oder wobei das Motorsteuerungssystem dazu eingerichtet ist, von dem sensorlosen feldorientierten Regeln zu dem rastpositionsbezogenen Steuern umzuschalten, wenn die Drehzahl der Drehbewegung der Gewindespindel den Drehzahl-Schwellwertbereich unterschreitet.

Der Drehzahl-Schwellwertbereich kann beispielsweise aus genau einem Wert, nämlich dem Schwellwert, bestehen. Dann kann das Umschalten ohne eine Hysterese erfolgen. Gemäß einer anderen Ausführungsform umfasst der Drehzahl-Schwellwertbereich ein Schwellwertintervall. Dann gibt es eine Hysterese derart, dass das Überschreiten des Drehzahl-Schwellwertbereichs mit dem Überschreiten des maximalen Schwellwerts des Schwellwertintervalls erfolgt und dass das Unterschreiten des Drehzahl-Schwellwertbereichs mit dem Unterschreiten des minimalen Schwellwerts des Schwellwertintervalls erfolgt.

Die Erfindung betrifft ferner ein Computertomographiegerät, aufweisend das erfindungsgemäße System, eine Strahlungsquelle zur Erzeugung der Röntgenstrahlung und einen Detektor,
- wobei die Strahlengangskomponente in Form einer ersten Blendenbacke in das Wagensystem aufgenommen ist,
- wobei das System zum Positionieren der ersten Blendenbacke für ein Einstellen einer Schichtkollimation eines Fächerstrahls der Röntgenstrahlung eingerichtet ist,
- wobei der Gewindetrieb dazu eingerichtet ist, eine erste Drehbewegung der Gewindespindel in eine erste Translationsbewegung des Wagensystems umzusetzen, durch die das Positionieren der ersten Blendenbacke in dem rastpositionsbezogenen Betriebszustand des Systems erfolgt, und eine zweite Drehbewegung der Gewindespindel in eine zweite Translationsbewegung des Wagensystems umzusetzen, durch die ein Bewegen der ersten Blendenbacke in dem feldorientierten Betriebszustand des Systems erfolgt.

Insbesondere kann vorgesehen sein, dass das System ferner zum Positionieren einer zweiten Blendenbacke für das Einstellen der Schichtkollimation des Fächerstrahls der Röntgenstrahlung eingerichtet ist.

Eine Ausführungsform sieht vor, dass der Detektor eingerichtet ist zum Erfassen von Projektionsdaten eines abzubildenden Bereichs eines Patienten, während der Detektor und die Strahlungsquelle in einer Rotationsebene um eine Rotationsachse gedreht werden und gleichzeitig der abzubildende Bereich des Patienten relativ zu der Rotationsebene bewegt wird, wobei der Fächerstrahl den abzubildenden Bereich des Patienten durchdringt und auf den Detektor trifft, wobei das System ferner zu dem Bewegen der ersten Blendenbacke in dem feldorientierten Betriebszustand des Systems während des Erfassens der Projektionsdaten derart eingerichtet ist, dass eine Lage einer Begrenzungsfläche des Fächerstrahls an eine Lage einer Begrenzungsfläche des abzubildenden Bereichs des Patienten dynamisch angepasst werden kann, sodass im Wesentlichen vermieden wird, dass der Fächerstrahl den Patienten außerhalb des abzubildenden Bereichs durchdringt.

Die Erfindung betrifft ferner ein Verfahren zum Bewegen einer Strahlengangskomponente für eine Röntgenstrahlung mittels des erfindungsgemäßen Systems, wobei die Strahlengangskomponente in das Wagensystem aufgenommen ist, wobei die Drehbewegung der Gewindespindel mittels des Schrittmotors angetrieben wird, wobei in dem feldorientierten Betriebszustand des Systems die Drehbewegung der Gewindespindel mittels des Motorsteuerungssystems sensorlos feldorientiert geregelt wird.

Eine Ausführungsform sieht vor, dass in dem rastpositionsbezogenen Betriebszustand des Systems die Drehbewegung der Gewindespindel mittels des Motorsteuerungssystems rastpositionsbezogen gesteuert wird. Eine Ausführungsform sieht vor, dass in Abhängigkeit von einer Drehzahl der Drehbewegung der Gewindespindel mittels des Motorsteuerungssystems zwischen dem sensorlosen feldorientierten Regeln und dem rastpositionsbezogenen Steuern umgeschaltet wird.

Eine Ausführungsform sieht vor, dass mittels des Motorsteuerungssystems von dem rastpositionsbezogenen Steuern zu dem sensorlosen feldorientierten Regeln umgeschaltet wird, wenn eine Drehzahl der Drehbewegung der Gewindespindel einen Drehzahl-Schwellwertbereich überschreitet, und/oder wobei mittels des Motorsteuerungssystems von dem sensorlosen feldorientierten Regeln zu dem rastpositionsbezogenen Steuern umgeschaltet wird, wenn die Drehzahl der Drehbewegung der Gewindespindel den Drehzahl-Schwellwertbereich unterschreitet.

Eine Ausführungsform sieht vor, dass die Strahlengangskomponente in Form einer ersten Blendenbacke eines Computertomographiegeräts in das Wagensystem aufgenommen ist,
- wobei das Computertomographiegerät eine Strahlungsquelle zur Erzeugung der Röntgenstrahlung und einen Detektor aufweist,
- das Verfahren umfassend ein Positionieren der ersten Blendenbacke für ein Einstellen einer Schichtkollimation eines Fächerstrahls der Röntgenstrahlung,
- wobei mittels des Gewindetriebs eine erste Drehbewegung der Gewindespindel in eine erste Translationsbewegung des Wagensystems umgesetzt wird, durch die das Positionieren der ersten Blendenbacke in dem rastpositionsbezogenen Betriebszustand des Systems erfolgt, und eine zweite Drehbewegung der Gewindespindel in eine zweite Translationsbewegung des Wagensystems umgesetzt wird, durch die ein Bewegen der ersten Blendenbacke in dem feldorientierten Betriebszustand des Systems erfolgt.

Insbesondere kann das Verfahren das Positionieren der ersten Blendenbacke und ein Positionieren einer zweiten Blendenbacke des Computertomographiegeräts mittels des Systems derart umfassen, dass mittels der ersten Blendenbacke und der zweiten Blendenbacke eine Schichtkollimation eines Fächerstrahls der Röntgenstrahlung eingestellt wird.

Eine Ausführungsform sieht vor, dass das Verfahren ferner ein Erfassen von Projektionsdaten eines abzubildenden Bereichs eines Patienten mittels des Detektors umfasst, während der Detektor und die Strahlungsquelle in einer Rotationsebene um eine Rotationsachse gedreht werden und gleichzeitig der abzubildende Bereich des Patienten relativ zu der Rotationsebene bewegt wird, wobei der Fächerstrahl den abzubildenden Bereich des Patienten durchdringt und auf den Detektor trifft, wobei das Bewegen der ersten Blendenbacke mittels des Systems in dem feldorientierten Betriebszustand des Systems während des Erfassens der Projektionsdaten derart erfolgt, dass eine Lage einer Begrenzungsfläche des Fächerstrahls an eine Lage einer Begrenzungsfläche des abzubildenden Bereichs des Patienten dynamisch angepasst wird, sodass im Wesentlichen vermieden wird, dass der Fächerstrahl den Patienten außerhalb des abzubildenden Bereichs durchdringt.

Damit kann das Bewegen der Strahlengangskomponente ohne zusätzlichen Sensor zur Rotorlagenerkennung erfolgen, wobei sowohl ein Betrieb im Positioniermodus als auch ein dynamischer Betrieb im Drehzahlmodus ermöglicht wird. Dies ist vorteilhaft durch einen günstigeren Systemaufbau sowie geringere Bauraumanforderungen, insbesondere innerhalb der Strahlerblende. Außerdem verringert die Einsparung des separaten Sensors die Designkomplexität und reduziert die Anzahl der Komponenten. Ebenso entfällt damit ein Bauteil, welches potenziell anfällig gegenüber Röntgenstrahlung ist, wodurch das Ausfallrisiko verringert wird.

Bei kleinen Drehzahlen ist das rastpositionsbezogene Steuern vorteilhaft im Vergleich zum sensorlosen feldorientierten Regeln, insbesondere wenn das sensorlose feldorientierte Regeln unter Aufschaltung von Testströmen erfolgt, welche sich nachteilig auf die Dynamik und/oder die Laufruhe auswirken können.

Im Rahmen der Erfindung können Merkmale, welche in Bezug auf unterschiedliche Ausführungsformen der Erfindung und/oder unterschiedliche Anspruchskategorien (Verfahren, Verwendung, Vorrichtung, System, Anordnung usw.) beschrieben sind, zu weiteren Ausführungsformen der Erfindung kombiniert werden. Beispielsweise kann ein Anspruch, der eine Vorrichtung betrifft, auch mit Merkmalen, die im Zusammenhang mit einem Verfahren beschrieben oder beansprucht sind, weitergebildet werden und umgekehrt. Funktionale Merkmale eines Verfahrens können dabei durch entsprechend ausgebildete gegenständliche Komponenten ausgeführt werden. Die Verwendung des unbestimmten Artikels "ein" bzw. "eine" schließt nicht aus, dass das betroffene Merkmal auch mehrfach vorhanden sein kann.

Im Folgenden werden Merkmale der Erfindung anhand von Beispielen unter Hinweis auf die beigefügten Figuren erläutert. Die Darstellung in den Figuren ist schematisch, stark vereinfacht und nicht zwingend maßstabsgetreu.

Im Folgenden werden Beispiele, die für das Verständnis der Erfindung und/oder des zu lösenden technischen Problems hilfreich sein können, unter Hinweis auf die beigefügten Figuren erläutert.

Die Fig. 1 zeigt ein System zum Bewegen einer Strahlengangskomponente für eine Röntgenstrahlung.

Die Fig. 2 zeigt eine Darstellung einer Mehrschicht-Computertomographie-Bildgebungsuntersuchung unter Verwendung einer Strahlengangskomponente.

Die Fig. 3 zeigt ein Ablaufdiagramm eines Verfahren zum Bewegen einer Strahlengangskomponente.

Die Fig. 4 zeigt ein Computertomographiegerät.

Die Fig. 5 zeigt einen zeitlichen Verlauf einer Drehzahl einer Drehbewegung der Gewindespindel.

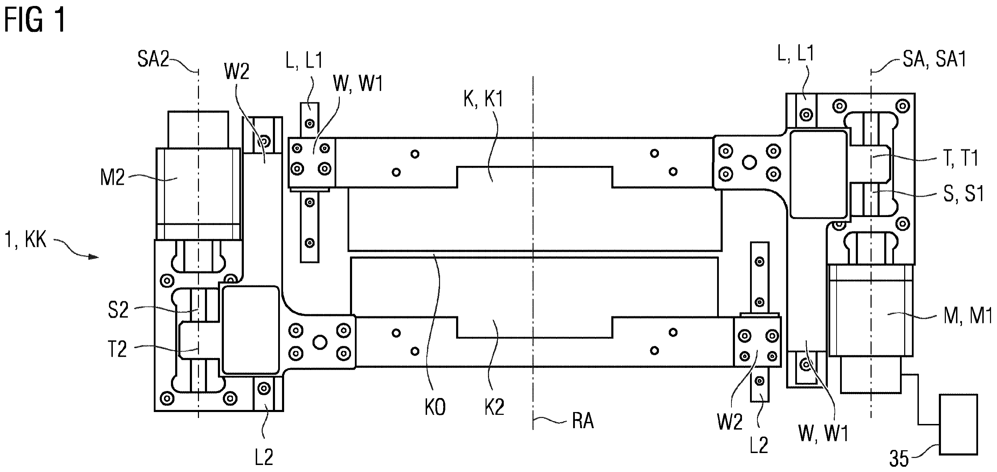

Die Fig. 1 zeigt das System 1 zum Bewegen einer Strahlengangskomponente K für eine Röntgenstrahlung 27,
- wobei das System 1 eine Linearführung L, ein Wagensystem W, eine Gewindespindel S, einen Gewindetrieb T, einen Schrittmotor M und ein Motorsteuerungssystem 35 aufweist,
- wobei das Wagensystem W zur Aufnahme der Strahlengangskomponente K eingerichtet ist und mittels der Linearführung L parallel zu einer Spindeldrehachse SA der Gewindespindel S bewegbar gelagert ist,
- wobei der Gewindetrieb T dazu eingerichtet ist, eine Drehbewegung der Gewindespindel S um die Spindeldrehachse SA in eine Translationsbewegung des Wagensystems W parallel zu der Spindeldrehachse SA umzusetzen,
- wobei der Schrittmotor M zum Antreiben der Drehbewegung der Gewindespindel S eingerichtet ist,
- dadurch gekennzeichnet, dass in einem feldorientierten Betriebszustand des Systems 1 das Motorsteuerungssystem 35 zu einem sensorlosen feldorientierten Regeln der Drehbewegung der Gewindespindel S eingerichtet ist.

Das Motorsteuerungssystem 35 ist auch zum Steuern und Regeln von Drehbewegungen der zweiten Gewindespindel S2 eingerichtet, insbesondere gemäß einem oder mehreren der für die erste Gewindespindel S2 beschriebenen Aspekte. Das gezeigte Beispiel sieht vor, dass in einem rastpositionsbezogenen Betriebszustand des Systems 1 das Motorsteuerungssystem 35 zu einem rastpositionsbezogenen Steuern der Drehbewegung der Gewindespindel S eingerichtet ist. Das gezeigte Beispiel sieht vor, dass das Motorsteuerungssystem 35 dazu eingerichtet ist, in Abhängigkeit von einer Drehzahl H der Drehbewegung der Gewindespindel S zwischen dem sensorlosen feldorientierten Regeln und dem rastpositionsbezogenen Steuern umzuschalten.

Das gezeigte Beispiel sieht vor, dass das Motorsteuerungssystem 35 dazu eingerichtet ist, von dem rastpositionsbezogenen Steuern zu dem sensorlosen feldorientierten Regeln umzuschalten, wenn eine Drehzahl H der Drehbewegung der Gewindespindel S einen Drehzahl-Schwellwertbereich H1 überschreitet, und/oder wobei das Motorsteuerungssystem 35 dazu eingerichtet ist, von dem sensorlosen feldorientierten Regeln zu dem rastpositionsbezogenen Steuern umzuschalten, wenn die Drehzahl H der Drehbewegung der Gewindespindel S den Drehzahl-Schwellwertbereich H1 unterschreitet.

Der Kollimator KK weist die zweite Gewindespindel S2 und den zweiten Gewindetrieb T2 auf, wobei der zweite Gewindetrieb T2 dazu ausgebildet ist, eine erste Drehbewegung der zweiten Gewindespindel S2 in eine erste Translationsbewegung der zweiten Blendenbacke K2 umzusetzen, durch die das Positionieren PK2 der zweiten Blendenbacke K2 erfolgt, und eine zweite Drehbewegung der zweiten Gewindespindel S2 in eine zweite Translationsbewegung der zweiten Blendenbacke K2 umzusetzen, durch die das Bewegen BK2 der zweiten Blendenbacke K2 erfolgt.

Der Kollimator KK weist den ersten Schrittmotor M1 zum Antreiben der ersten Drehbewegung der ersten Gewindespindel S1 und der zweiten Drehbewegung der ersten Gewindespindel S1 auf. Der Kollimator KK weist den zweiten Schrittmotor M2 zum Antreiben der ersten Drehbewegung der zweiten Gewindespindel S2 und der zweiten Drehbewegung der zweiten Gewindespindel S2 auf.

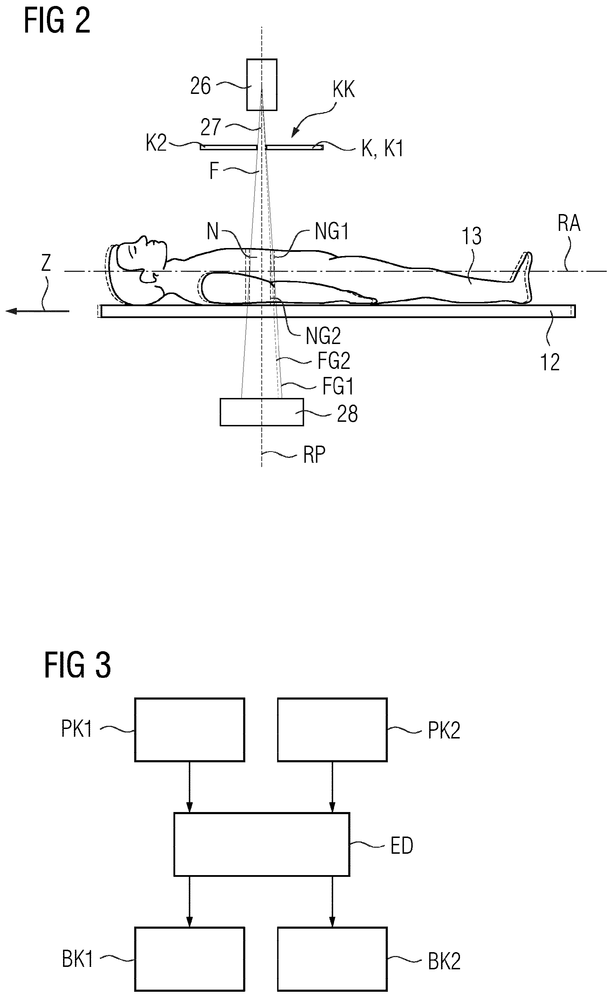

Die Fig. 2 zeigt eine Darstellung einer Mehrschicht-Computertomographie-Bildgebungsuntersuchung des Patienten 13 unter Verwendung des Kollimators KK.

Der Kollimator KK ist ausgebildet zum Positionieren PK1 der ersten Blendenbacke K1 und zum Positionieren PK2 der zweiten Blendenbacke K2 derart, dass mittels der ersten Blendenbacke K1 und der zweiten Blendenbacke K2 eine Schichtkollimation des Fächerstrahls F der Strahlung 27 eingestellt werden kann. Dabei dringt ein Teil der Strahlung 27 durch den Kollimatorspalt K0, der zwischen der ersten Blendenbacke K1 und der zweiten Blendenbacke K2 ausgebildet ist.

Der Detektor 28 ist ausgebildet zum Erfassen ED der Projektionsdaten eines abzubildenden Bereichs N eines Patienten 13, während der Detektor 28 und die Strahlungsquelle 26 in einer Rotationsebene RP um die Rotationsachse RA gedreht werden und gleichzeitig der abzubildende Bereich N des Patienten 13 relativ zu der Rotationsebene RP bewegt wird, wobei der Fächerstrahl F den abzubildenden Bereich N des Patienten 13 durchdringt und auf den Detektor 28 trifft.

Der Kollimator KK ist ferner ausgebildet zum Bewegen BK1 der ersten Blendenbacke K1 und/oder zum Bewegen BK2 der zweiten Blendenbacke K2 während des Erfassens ED der Projektionsdaten derart, dass eine Lage einer Begrenzungsfläche des Fächerstrahls F an eine Lage einer Begrenzungsfläche des abzubildenden Bereichs N des Patienten 13 dynamisch angepasst werden kann, sodass im Wesentlichen vermieden wird, dass der Fächerstrahl F den Patienten 13 außerhalb des abzubildenden Bereichs N durchdringt.

Der Patient 13 und damit dessen abzubildender Bereich N werden mittels der Patientenlagerungsvorrichtung 10 in die Richtung Z, die parallel zu der Rotationsachse RA ist, bewegt. Aufgrund der Bewegung des abzubildenden Bereichs N des Patienten 13 relativ zu der Rotationsebene RP ändert sich die Lage der Begrenzungsfläche des abzubildenden Bereichs N des Patienten 13 von der Lage NG1 zu der Lage NG2.

Aufgrund der Bewegung der ersten Blendenbacke K1 in die Richtung Z ändert sich die Lage der Begrenzungsfläche des Fächerstrahls F von der Lage FG1 zu der Lage FG2. Dabei wird ein Anteil der Strahlung 27, der in der Lage FG1 noch Teil des Fächerstrahls F war, von der ersten Blendenbacke K1 ausgeblendet, sodass dieser Anteil der Strahlung 27 in der Lage FG2 nicht mehr Teil des Fächerstrahls F ist. Wenn dieser Anteil der Strahlung 27 nicht ausgeblendet wird, durchdringt er den Patienten 13 außerhalb des abzubildenden Bereichs N, wenn sich dessen Begrenzungsfläche in der Lage NG2 befindet.

Der Kollimator KK ist dazu ausgebildet, bei dem Erfassen ED der Projektionsdaten die Schichtkollimation des Fächerstrahls F der Strahlung 27 während mindestens einer halben Umdrehung des Detektors 28 und der Strahlungsquelle 26 um die Rotationsachse RA konstant zu halten.

Der Kollimator KK ist dazu ausgebildet, die Lage der Begrenzungsfläche FG des Fächerstrahls F dynamisch an die Lage der Begrenzungsfläche NG des abzubildenden Bereichs N des Patienten 13 anzupassen, bis eine vollständige Ausblendung des Fächerstrahls F durch die erste Blendenbacke K1 und die zweite Blendenbacke K2, beispielsweise aufgrund eines vollständigen Verschließens des Kollimatorspalts K0, eintritt. Das Verschließen des Kollimatorspalts K0 kann insbesondere synchron zu einem abschließenden Abschnitt des Spiralscans erfolgen.

Die Fig. 3 zeigt ein Ablaufdiagramm eines Verfahren zum Bewegen der Strahlengangskomponente K mittels des Computertomographiegeräts 2, das die Strahlungsquelle 26 zur Erzeugung der Strahlung 27, den Detektor 28 und den Kollimator KK mit der ersten Blendenbacke K1 und der zweiten Blendenbacke K2 aufweist, wobei die Strahlengangskomponente K in Form der ersten Blendenbacke K1 in das Wagensystem W aufgenommen ist, das Verfahren umfassend:
- Positionieren PK1 der ersten Blendenbacke K1 und Positionieren PK2 der zweiten Blendenbacke K2 derart, dass mittels der ersten Blendenbacke K1 und der zweiten Blendenbacke K2 eine Schichtkollimation des Fächerstrahls F der Strahlung 27 eingestellt wird,
- Erfassen ED der Projektionsdaten des abzubildenden Bereichs N des Patienten 13 mittels des Detektors 28, während der Detektor 28 und die Strahlungsquelle 26 in der Rotationsebene RP um die Rotationsachse RA gedreht werden und gleichzeitig der abzubildende Bereich N des Patienten 13 relativ zu der Rotationsebene RP bewegt wird, wobei der Fächerstrahl F den abzubildenden Bereich N des Patienten 13 durchdringt und auf den Detektor 28 trifft,
- Bewegen BK1 der ersten Blendenbacke K1 und/oder Bewegen BK2 der zweiten Blendenbacke K2 während des Erfassens ED der Projektionsdaten derart, dass eine Lage FG1, FG2 einer Begrenzungsfläche des Fächerstrahls F an eine Lage NG1, NG2 einer Begrenzungsfläche des abzubildenden Bereichs N des Patienten 13 dynamisch angepasst wird, sodass im Wesentlichen vermieden wird, dass der Fächerstrahl F den Patienten 13 außerhalb des abzubildenden Bereichs N durchdringt.

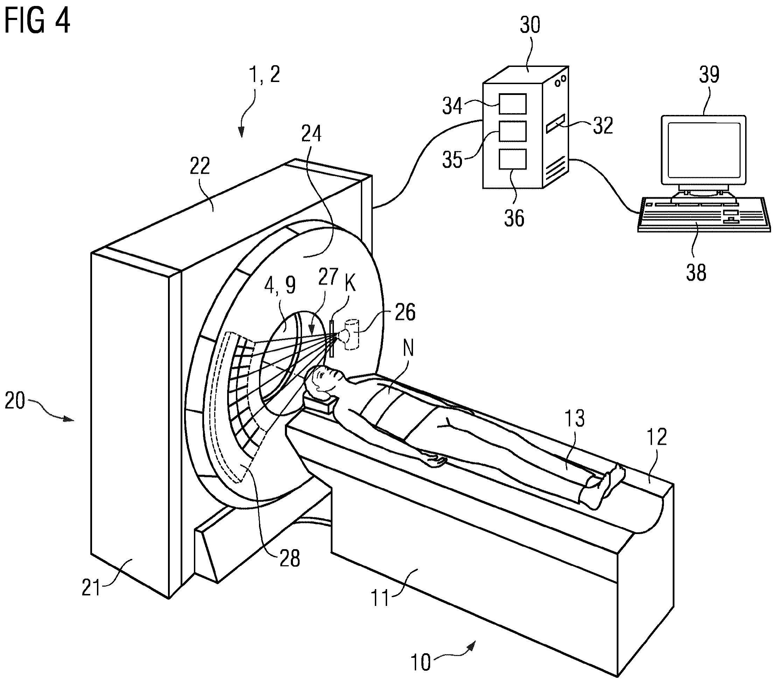

Die Fig. 4 zeigt das Computertomographiegerät 2, aufweisend das System 1, eine Strahlungsquelle 26 zur Erzeugung der Röntgenstrahlung 27 und einen Detektor 28,
- wobei die Strahlengangskomponente K in Form einer ersten Blendenbacke K1 in das Wagensystem W aufgenommen ist,
- wobei das System 1 zum Positionieren PK1 der ersten Blendenbacke K1 für ein Einstellen einer Schichtkollimation eines Fächerstrahls F der Röntgenstrahlung 27 eingerichtet ist,
- wobei der Gewindetrieb T dazu eingerichtet ist, eine erste Drehbewegung der Gewindespindel S in eine erste Translationsbewegung des Wagensystems W umzusetzen, durch die das Positionieren PK1 der ersten Blendenbacke K1 in dem rastpositionsbezogenen Betriebszustand des Systems 1 erfolgt, und eine zweite Drehbewegung der Gewindespindel S in eine zweite Translationsbewegung des Wagensystems W umzusetzen, durch die ein Bewegen BK1 der ersten Blendenbacke K1 in dem feldorientierten Betriebszustand des Systems 1 erfolgt.

Insbesondere kann vorgesehen sein, dass das System 1 ferner zum Positionieren PK2 einer zweiten Blendenbacke K2 für das Einstellen der Schichtkollimation des Fächerstrahls F der Röntgenstrahlung 27 eingerichtet ist.

Das gezeigte Beispiel sieht vor, dass der Detektor 28 eingerichtet ist zum Erfassen ED von Projektionsdaten eines abzubildenden Bereichs N eines Patienten 13, während der Detektor 28 und die Strahlungsquelle 26 in einer Rotationsebene RP um eine Rotationsachse RA gedreht werden und gleichzeitig der abzubildende Bereich N des Patienten 13 relativ zu der Rotationsebene RP bewegt wird, wobei der Fächerstrahl F den abzubildenden Bereich N des Patienten 13 durchdringt und auf den Detektor 28 trifft, wobei das System 1 ferner zu dem Bewegen BK1 der ersten Blendenbacke K1 in dem feldorientierten Betriebszustand des Systems 1 während des Erfassens ED der Projektionsdaten derart eingerichtet ist, dass eine Lage FG1, FG2 einer Begrenzungsfläche des Fächerstrahls F an eine Lage NG1, NG2 einer Begrenzungsfläche des abzubildenden Bereichs N des Patienten 13 dynamisch angepasst werden kann, sodass im Wesentlichen vermieden wird, dass der Fächerstrahl F den Patienten 13 außerhalb des abzubildenden Bereichs N durchdringt.

Das gezeigte Beispiel sieht vor, dass die Strahlengangskomponente K in das Wagensystem W aufgenommen ist, wobei die Drehbewegung der Gewindespindel S mittels des Schrittmotors M angetrieben wird, wobei in dem feldorientierten Betriebszustand des Systems 1 die Drehbewegung der Gewindespindel S mittels des Motorsteuerungssystems 35 sensorlos feldorientiert geregelt wird. Das gezeigte Beispiel sieht vor, dass in dem rastpositionsbezogenen Betriebszustand des Systems 1 die Drehbewegung der Gewindespindel S mittels des Motorsteuerungssystems 35 rastpositionsbezogen gesteuert wird.

Das gezeigte Beispiel sieht vor, dass in Abhängigkeit von einer Drehzahl H der Drehbewegung der Gewindespindel S mittels des Motorsteuerungssystems 35 zwischen dem sensorlosen feldorientierten Regeln und dem rastpositionsbezogenen Steuern umgeschaltet wird.

Das gezeigte Beispiel sieht vor, dass mittels des Motorsteuerungssystems 35 von dem rastpositionsbezogenen Steuern zu dem sensorlosen feldorientierten Regeln umgeschaltet wird, wenn eine Drehzahl H der Drehbewegung der Gewindespindel S einen Drehzahl-Schwellwertbereich H1 überschreitet, und/oder wobei mittels des Motorsteuerungssystems 35 von dem sensorlosen feldorientierten Regeln zu dem rastpositionsbezogenen Steuern umgeschaltet wird, wenn die Drehzahl H der Drehbewegung der Gewindespindel S den Drehzahl-Schwellwertbereich H1 unterschreitet.

Das gezeigte Beispiel sieht vor, dass die Strahlengangskomponente K in Form einer ersten Blendenbacke K1 eines Computertomographiegeräts 2 in das Wagensystem W aufgenommen ist, wobei das Computertomographiegerät 2 eine Strahlungsquelle 26 zur Erzeugung der Röntgenstrahlung 27 und einen Detektor 28 aufweist, das Verfahren umfassend ein Positionieren PK1 der ersten Blendenbacke K1 für ein Einstellen einer Schichtkollimation eines Fächerstrahls F der Röntgenstrahlung 27, wobei mittels des Gewindetriebs T eine erste Drehbewegung der Gewindespindel S in eine erste Translationsbewegung des Wagensystems W umgesetzt wird, durch die das Positionieren PK1 der ersten Blendenbacke K1 in dem rastpositionsbezogenen Betriebszustand des Systems 1 erfolgt, und eine zweite Drehbewegung der Gewindespindel S in eine zweite Translationsbewegung des Wagensystems W umgesetzt wird, durch die ein Bewegen BK1 der ersten Blendenbacke K1 in dem feldorientierten Betriebszustand des Systems 1 erfolgt.

Das Computertomographiegerät 2 weist ferner die Gantry 20, die tunnelförmige Öffnung 9, die Patientenlagerungsvorrichtung 10 und die Steuerungsvorrichtung 30 auf. Die Gantry 20 weist den stationären Tragrahmen 21, den Kipprahmen 22 und den Rotor 24 auf.

Der Kipprahmen 22 ist mittels einer Kipplagerungsvorrichtung an dem stationären Tragrahmen 21 um eine Kippachse relativ zu dem stationären Tragrahmen 21 kippbar angeordnet. Der Rotor 24 ist mittels einer Drehlagerungsvorrichtung an dem Kipprahmen 22 um die Rotationsachse RA relativ zu dem Kipprahmen 22 drehbar angeordnet. Die Rotationsachse RA ist senkrecht zu der Kippachse.

In die tunnelförmige Öffnung 9 ist der Patient 13 einführbar. In der tunnelförmigen Öffnung 9 befindet sich der Akquisitionsbereich 4. In dem Akquisitionsbereich 4 ist der abzubildender Bereich N des Patienten 13 derart positionierbar, dass die Strahlung 27 von der Strahlungsquelle 26 zu dem abzubildenden Bereich gelangen kann und nach einer Wechselwirkung mit dem abzubildenden Bereich zu dem Strahlungsdetektor 28 gelangen kann.

Die Patientenlagerungsvorrichtung 10 weist den Lagerungssockel 11 und die Lagerungsplatte 12 zur Lagerung des Patienten 13 auf. Die Lagerungsplatte 12 ist derart relativ zu dem Lagerungssockel 11 bewegbar an dem Lagerungssockel 11 angeordnet, dass die Lagerungsplatte 12 in einer Längsrichtung der Lagerungsplatte 12 in den Akquisitionsbereich 4 einführbar ist.

Die Steuerungsvorrichtung 30 ist zum Empfangen der von dem Detektor erfassten Projektionsdaten ausgebildet. Die Steuerungsvorrichtung 30 ist zum Steuern des Computertomographiegeräts 2 ausgebildet. Die Steuerungsvorrichtung 30 weist das Motorsteuerungssystem 35, das computerlesbare Medium 32 und das Prozessorsystem 36 auf. Die Steuerungsvorrichtung 30, insbesondere das Motorsteuerungssystem 35, wird von einem Datenverarbeitungssystem, welches einen Computer aufweist, gebildet.

Die Steuerungsvorrichtung 30 weist die Bildrekonstruktionseinrichtung 34 auf. Mittels der Bildrekonstruktionseinrichtung 34 kann basierend auf den Projektionsdaten ein medizinischer Bilddatensatz rekonstruiert werden.

Das Computertomographiegerät 2 weist eine Eingabevorrichtung 38 und eine Ausgabevorrichtung 39 auf, welche jeweils mit der Steuerungsvorrichtung 30 verbunden sind.

Die Eingabevorrichtung 38 ist zum Eingeben von Steuerungs-Informationen, z. B. Bildrekonstruktionsparametern, Untersuchungsparametern oder ähnliches, ausgebildet. Die Ausgabevorrichtung 39 ist insbesondere zum Ausgeben von Steuerungs-Informationen, Bildern und/oder akustischen Signalen ausgebildet.

Insbesondere kann das Verfahren das Positionieren PK1 der ersten Blendenbacke K1 und ein Positionieren PK2 einer zweiten Blendenbacke K2 des Computertomographiegeräts 2 mittels des Systems 1 derart umfassen, dass mittels der ersten Blendenbacke K1 und der zweiten Blendenbacke K2 eine Schichtkollimation eines Fächerstrahls F der Röntgenstrahlung 27 eingestellt wird.

Das gezeigte Beispiel sieht vor, dass das Verfahren ein Erfassen ED von Projektionsdaten eines abzubildenden Bereichs N eines Patienten 13 mittels des Detektors 28 umfasst, während der Detektor 28 und die Strahlungsquelle 26 in einer Rotationsebene RP um eine Rotationsachse RA gedreht werden und gleichzeitig der abzubildende Bereich N des Patienten 13 relativ zu der Rotationsebene RP bewegt wird, wobei der Fächerstrahl F den abzubildenden Bereich N des Patienten 13 durchdringt und auf den Detektor 28 trifft, wobei das Bewegen BK1 der ersten Blendenbacke K1 mittels des Systems 1 in dem feldorientierten Betriebszustand des Systems 1 während des Erfassens ED der Projektionsdaten derart erfolgt, dass eine Lage FG1, FG2 einer Begrenzungsfläche des Fächerstrahls F an eine Lage NG1, NG2 einer Begrenzungsfläche des abzubildenden Bereichs N des Patienten 13 dynamisch angepasst wird, sodass im Wesentlichen vermieden wird, dass der Fächerstrahl F den Patienten 13 außerhalb des abzubildenden Bereichs N durchdringt.

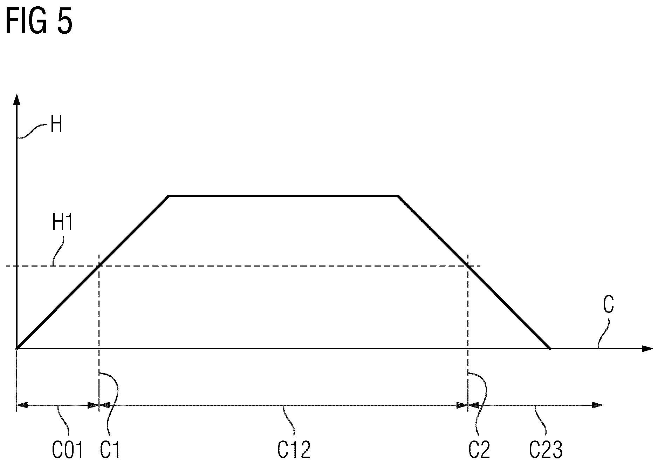

Die Fig. 5 zeigt einen zeitlichen Verlauf der Drehzahl H der Drehbewegung der Gewindespindel S über der Zeitachse C. In dem Zeitintervall C01 ist das System 1 in dem rastpositionsbezogenen Betriebszustand, wobei die Drehzahl H mit der Zeit zunimmt. Zum Zeitpunkt C1 wird der Drehzahl-Schwellwertbereich H1 überschritten. In dem Zeitintervall C12 ist das System 1 in dem feldorientierten Betriebszustand. Zum Zeitpunkt C2 wird der Drehzahl-Schwellwertbereitbereich H1 unterschritten. In dem Zeitintervall C23 ist das System 1 in dem rastpositionsbezogenen Betriebszustand, wobei die Drehzahl H mit der Zeit abnimmt.

## Patentansprüche

1. System (1) zum Bewegen einer Strahlengangskomponente (K) für eine Röntgenstrahlung (27),
- wobei das System (1) eine Linearführung (L), ein Wagensystem (W), eine Gewindespindel (S), einen Gewindetrieb (T), einen Schrittmotor (M) und ein Motorsteuerungssystem (35) aufweist,
- wobei das Wagensystem (W) zur Aufnahme der Strahlengangskomponente (K) eingerichtet ist und mittels der Linearführung (L) parallel zu einer Spindeldrehachse (SA) der Gewindespindel (S) bewegbar gelagert ist,
- wobei der Gewindetrieb (T) dazu eingerichtet ist, eine Drehbewegung der Gewindespindel (S) um die Spindeldrehachse (SA) in eine Translationsbewegung des Wagensystems (W) parallel zu der Spindeldrehachse (SA) umzusetzen,
- wobei der Schrittmotor (M) zum Antreiben der Drehbewegung der Gewindespindel (S) eingerichtet ist,
- **dadurch gekennzeichnet, dass** in einem feldorientierten Betriebszustand des Systems (1) das Motorsteuerungssystem (35) zu einem sensorlosen feldorientierten Regeln der Drehbewegung der Gewindespindel (S) eingerichtet ist.

2. System (1) nach Anspruch 1,
- wobei das sensorlose feldorientierte Regeln auf einem rückgekoppelten Beobachter-Modell basiert.

3. System (1) nach Anspruch 2,
- wobei das Beobachter-Modell auf einem Luenberger-Beobachter und/oder einem erweiterten Kalman-Filter basiert.

4. System (1) nach einem der Ansprüche 1 bis 3,
- wobei das sensorlose feldorientierte Regeln auf einem rückkopplungslosen Schätzer-Modell basiert.

5. System (1) nach einem der Ansprüche 1 bis 4,
- wobei in einem rastpositionsbezogenen Betriebszustand des Systems (1) das Motorsteuerungssystem (35) zu einem rastpositionsbezogenen Steuern der Drehbewegung der Gewindespindel (S) eingerichtet ist.

6. System (1) nach Anspruch 5,
- wobei das Motorsteuerungssystem (35) dazu eingerichtet ist, in Abhängigkeit von einer Drehzahl (H) der Drehbewegung der Gewindespindel (S) zwischen dem sensorlosen feldorientierten Regeln und dem rastpositionsbezogenen Steuern umzuschalten.

7. System (1) nach Anspruch 5 oder 6,
- wobei das Motorsteuerungssystem (35) dazu eingerichtet ist, von dem rastpositionsbezogenen Steuern zu dem sensorlosen feldorientierten Regeln umzuschalten, wenn eine Drehzahl (H) der Drehbewegung der Gewindespindel (S) einen Drehzahl-Schwellwertbereich (H1) überschreitet, und/oder
- wobei das Motorsteuerungssystem (35) dazu eingerichtet ist, von dem sensorlosen feldorientierten Regeln zu dem rastpositionsbezogenen Steuern umzuschalten, wenn die Drehzahl (H) der Drehbewegung der Gewindespindel (S) den Drehzahl-Schwellwertbereich (H1) unterschreitet.

8. Computertomographiegerät (2), aufweisend das System (1) nach einem der Ansprüche 5 bis 7, eine Strahlungsquelle (26) zur Erzeugung der Röntgenstrahlung (27) und einen Detektor (28),
- wobei die Strahlengangskomponente (K) in Form einer ersten Blendenbacke (K1) in das Wagensystem (W) aufgenommen ist,
- wobei das System (1) zum Positionieren (PK1) der ersten Blendenbacke (K1) für ein Einstellen einer Schichtkollimation eines Fächerstrahls (F) der Röntgenstrahlung (27) eingerichtet ist,
- wobei der Gewindetrieb (T) dazu eingerichtet ist, eine erste Drehbewegung der Gewindespindel (S) in eine erste Translationsbewegung des Wagensystems (W) umzusetzen, durch die das Positionieren (PK1) der ersten Blendenbacke (K1) in dem rastpositionsbezogenen Betriebszustand des Systems (1) erfolgt, und eine zweite Drehbewegung der Gewindespindel (S) in eine zweite Translationsbewegung des Wagensystems (W) umzusetzen, durch die ein Bewegen (BK1) der ersten Blendenbacke (K1) in dem feldorientierten Betriebszustand des Systems (1) erfolgt.

9. Computertomographiegerät (2) nach Anspruch 8,
- wobei der Detektor (28) eingerichtet ist zum Erfassen (ED) von Projektionsdaten eines abzubildenden Bereichs (N) eines Patienten (13), während der Detektor (28) und die Strahlungsquelle (26) in einer Rotationsebene (RP) um eine Rotationsachse (RA) gedreht werden und gleichzeitig der abzubildende Bereich (N) des Patienten (13) relativ zu der Rotationsebene (RP) bewegt wird, wobei der Fächerstrahl (F) den abzubildenden Bereich (N) des Patienten (13) durchdringt und auf den Detektor (28) trifft,
- wobei das System (1) ferner zu dem Bewegen (BK1) der ersten Blendenbacke (K1) in dem feldorientierten Betriebszustand des Systems (1) während des Erfassens (ED) der Projektionsdaten derart eingerichtet ist, dass eine Lage (FG1, FG2) einer Begrenzungsfläche des Fächerstrahls (F) an eine Lage (NG1, NG2) einer Begrenzungsfläche des abzubildenden Bereichs (N) des Patienten (13) dynamisch angepasst werden kann, sodass im Wesentlichen vermieden wird, dass der Fächerstrahl (F) den Patienten (13) außerhalb des abzubildenden Bereichs (N) durchdringt.

10. Verfahren zum Bewegen einer Strahlengangskomponente (K) für eine Röntgenstrahlung (27) mittels des Systems (1) nach einem der Ansprüche 1 bis 7,
- wobei die Strahlengangskomponente (K) in das Wagensystem (W) aufgenommen ist,
- wobei die Drehbewegung der Gewindespindel (S) mittels des Schrittmotors (M) angetrieben wird,
- wobei in dem feldorientierten Betriebszustand des Systems (1) die Drehbewegung der Gewindespindel (S) mittels des Motorsteuerungssystems (35) sensorlos feldorientiert geregelt wird.

11. Verfahren nach Anspruch 10,
- wobei in dem rastpositionsbezogenen Betriebszustand des Systems (1) die Drehbewegung der Gewindespindel (S) mittels des Motorsteuerungssystems (35) rastpositionsbezogen gesteuert wird.

12. Verfahren nach Anspruch 10 oder 11,
- wobei in Abhängigkeit von einer Drehzahl (H) der Drehbewegung der Gewindespindel (S) mittels des Motorsteuerungssystems (35) zwischen dem sensorlosen feldorientierten Regeln und dem rastpositionsbezogenen Steuern umgeschaltet wird.

13. Verfahren nach einem der Ansprüche 10 bis 12,
- wobei mittels des Motorsteuerungssystems (35) von dem rastpositionsbezogenen Steuern zu dem sensorlosen feldorientierten Regeln umgeschaltet wird, wenn eine Drehzahl (H) der Drehbewegung der Gewindespindel (S) einen Drehzahl-Schwellwertbereich (H1) überschreitet, und/oder
- wobei mittels des Motorsteuerungssystems (35) von dem sensorlosen feldorientierten Regeln zu dem rastpositionsbezogenen Steuern umgeschaltet wird, wenn die Drehzahl (H) der Drehbewegung der Gewindespindel (S) den Drehzahl-Schwellwertbereich (H1) unterschreitet.

14. Verfahren nach einem der Ansprüche 10 bis 13,
- wobei die Strahlengangskomponente (K) in Form einer ersten Blendenbacke (K1) eines Computertomographiegeräts (2) in das Wagensystem (W) aufgenommen ist,
- wobei das Computertomographiegerät (2) eine Strahlungsquelle (26) zur Erzeugung der Röntgenstrahlung (27) und einen Detektor (28) aufweist,
- das Verfahren umfassend ein Positionieren (PK1) der ersten Blendenbacke (K1) für ein Einstellen einer Schichtkollimation eines Fächerstrahls (F) der Röntgenstrahlung (27),
- wobei mittels des Gewindetriebs (T) eine erste Drehbewegung der Gewindespindel (S) in eine erste Translationsbewegung des Wagensystems (W) umgesetzt wird, durch die das Positionieren (PK1) der ersten Blendenbacke (K1) in dem rastpositionsbezogenen Betriebszustand des Systems (1) erfolgt, und eine zweite Drehbewegung der Gewindespindel (S) in eine zweite Translationsbewegung des Wagensystems (W) umgesetzt wird, durch die ein Bewegen (BK1) der ersten Blendenbacke (K1) in dem feldorientierten Betriebszustand des Systems (1) erfolgt.

15. Verfahren nach Anspruch 14,
- das Verfahren umfassend ein Erfassen (ED) von Projektionsdaten eines abzubildenden Bereichs (N) eines Patienten (13) mittels des Detektors (28), während der Detektor (28) und die Strahlungsquelle (26) in einer Rotationsebene (RP) um eine Rotationsachse (RA) gedreht werden und gleichzeitig der abzubildende Bereich (N) des Patienten (13) relativ zu der Rotationsebene (RP) bewegt wird, wobei der Fächerstrahl (F) den abzubildenden Bereich (N) des Patienten (13) durchdringt und auf den Detektor (28) trifft,
- wobei das Bewegen (BK1) der ersten Blendenbacke (K1) mittels des Systems (1) in dem feldorientierten Betriebszustand des Systems (1) während des Erfassens (ED) der Projektionsdaten derart erfolgt, dass eine Lage (FG1, FG2) einer Begrenzungsfläche des Fächerstrahls (F) an eine Lage (NG1, NG2) einer Begrenzungsfläche des abzubildenden Bereichs (N) des Patienten (13) dynamisch angepasst wird, sodass im Wesentlichen vermieden wird, dass der Fächerstrahl (F) den Patienten (13) außerhalb des abzubildenden Bereichs (N) durchdringt.
